(19) Europäisches Patentamt
European Patent Office
Office européen des brevets

(11) **EP 3 784 909 B1**

(12) **EUROPÄISCHE PATENTSCHRIFT**

(45) Veröffentlichungstag und Bekanntmachung des Hinweises auf die Patenterteilung:
**01.03.2023   Patentblatt 2023/09**

(21) Anmeldenummer: **20723814.8**

(22) Anmeldetag: **28.04.2020**

(51) Internationale Patentklassifikation (IPC):
**F04D 19/00** *(2006.01)*      **F04D 29/54** *(2006.01)*

(52) Gemeinsame Patentklassifikation (CPC):
**F04D 29/544; F04D 19/002**

(86) Internationale Anmeldenummer:
**PCT/EP2020/061786**

(87) Internationale Veröffentlichungsnummer:
**WO 2020/221760 (05.11.2020 Gazette 2020/45)**

(54) **NACHLEITVORRICHTUNG FÜR EINEN AXIALVENTILATOR**

OUTLET GUIDE DEVICE FOR AN AXIAL FAN

DISPOSITIF DE GUIDAGE POUR UN VENTILATEUR AXIAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2019   DE 102019110934**

(43) Veröffentlichungstag der Anmeldung:
**03.03.2021   Patentblatt 2021/09**

(73) Patentinhaber: **ebm-papst Mulfingen GmbH & Co. KG**
**74673 Mulfingen (DE)**

(72) Erfinder: **RATHGEB, Josef**
**73489 Jagstzell (DE)**

(74) Vertreter: **Staeger & Sperling Partnerschaftsgesellschaft mbB**
**Sonnenstraße 19**
**80331 München (DE)**

(56) Entgegenhaltungen:
**US-A- 2 224 519          US-A- 6 139 265**
**US-A1- 2006 093 476     US-A1- 2008 118 379**
**US-A1- 2008 193 287**

EP 3 784 909 B1

**Beschreibung**

Die Erfindung betrifft eine Nachleitvorrichtung ausgebildet zur Anordnung in eine abströmseitige Strömung eines Laufrades eines Axialventilators, welcher insbesondere im Nutzfahrzeugbereich einsetzbar ist.

Aus dem Stand der Technik ist bereits eine Vielzahl von Nachleitvorrichtungen für Axialventilatoren bekannt. Diese sind meist dazu ausgebildet, einen Elektromotor zum Antrieb eines Laufrades des Axialventilators mittig in einem Gehäuse zu halten, wobei die durch das Laufrad erzeugte Strömung durch die Nachleitvorrichtungen teils in einer vorbestimmten Weise beeinflusst wird. Von der Geometrie und der Ausrichtung einzelner zu der Nachleitvorrichtung gehörenden Nachleitstreben wird sowohl der Wirkungsgrad des Axialventilators bzw. der durch den Axialventilator erzeugbare Volumenstrom oder Strömung als auch eine Lautstärke des Axialventilators bei der Erzeugung des Volumenstroms bzw. der Strömung beeinflusst, wobei zu Lösungen der aus dem Stand der Technik bekannten Nachleitvorrichtungen Verbesserungsbedarf besteht.

Druckschriftlicher Stand der Technik im vorliegenden technischen Gebiet ist beispielsweise aus den Dokumenten US 2008/193287 A1 und US 2006/093476 A1 bekannt.

Der Erfindung liegt deshalb die Aufgabe zugrunde, die vorgenannten Nachteile zu überwinden und eine Nachleitvorrichtung bereitzustellen, durch welche der Wirkungsgrad eines Axialventilators erhöht und die Geräuschentwicklung reduziert werden kann.

Diese Aufgabe wird durch die Merkmalskombination gemäß Patentanspruch 1 gelöst.

Erfindungsgemäß wird eine Nachleitvorrichtung vorgeschlagen, welche zur Anordnung in eine abströmseitige Strömung eines Laufrades eines Axialventilators ausgebildet ist. Die Nachleitvorrichtung weist ein Gehäuse und eine Vielzahl von Nachleitstreben auf, welche jeweils mit dem Gehäuse verbunden sind. Darüber hinaus weisen die Nachleitstreben jeweils eine Vorderkante und eine Hinterkante auf. Jede der Nachleitstreben erstreckt sich in Radialrichtung einer Drehachse des Laufrades des Axialventiltaros von einem inneren Radius $r_i$ zu einem äußeren Radius $r_a$, wobei jede der Nachleitstreben im Querschnitt bzw. im Profil als ein NACA-Profil ausgebildet ist. Vorzugsweise sind die Nachleitstreben jeweils als ein vierstelliges NACA-Profil realisiert, wobei auch andere NACA-Profile grundsätzlich möglich sind. Das NACA-Profil ist zumindest durch seine maximale Profilwölbung f, seine Wölbungsrücklage $x_f$, seine Profildicke d und seine Dickenrücklage $x_d$ bestimmt. Jede der Nachleitstreben weist eine Erstreckung $L_{ax,N}$ entlang einer zu der Drehachse parallelen Axialrichtung z des Axialventilators auf, wobei die Ausrichtung jeder der Nachleitstreben jeweils durch einen Anstellwinkel $\alpha$ bestimmt ist, welcher der Winkel zwischen einer zu der Drehachse orthogonalen Ebene und einer Profilsehne der Nachleitstrebe ist. Die maximale Profilwölbung f, die Wölbungsrücklage $x_f$, die Profildicke d, die Dickenrücklage $x_d$, der Anstellwinkel $\alpha$ und die Erstreckung $L_{ax,N}$ jeder der Nachleitstreben sind in vorbestimmten Abständen entlang der Radialrichtung von dem inneren Radius $r_i$ zu dem äußeren Radius $r_a$ auf einen vorbestimmten Betriebspunkt oder Betriebsbereich des Axialventilators und der in dem Betriebspunkt oder Betriebsbereich von dem Laufrad erzeugten Strömung angepasst. Zumindest die maximale Profilwölbung f, die Wölbungsrücklage $x_f$, die Profildicke d, die Dickenrücklage $x_d$, der Anstellwinkel $\alpha$ oder die Erstreckung $L_{ax,N}$ einer Nachleitstrebe variiert entlang ihres Verlaufs in Radialrichtung zumindest abschnittsweise. Die Übergänge zwischen den Abschnitten einer Nachleitstrebe sind fließend ausgebildet. Die jeweilige Vorderkante jeder der Nachleitstreben ist mehrfach gekrümmt.

Im Weiteren ist "Betriebspunkt" als "Betriebspunkt oder Betriebsbereich" zu verstehen, wobei ein Betriebspunkt in dem Betriebsbereich liegen kann. Ein Betriebspunkt bezeichnet dabei insbesondere eine vorbestimmte Umdrehungszahl des Rotors bzw. Laufrades des Axialventilators, wobei der Betriebsbereich ein Bereich von Umdrehungszahlen des Rotors bzw. Laufrades ist, für welchen der Axialventilator ausgelegt ist.

Grundsätzlich ist es der erfinderische Gedanke, einen Profilverlauf bzw. Querschnittsverlauf der Nachleitstreben einer Nachleitvorrichtung für einen Axialventilator insbesondere im Nutzfahrzeugbereich über deren radiale Erstreckung so zu gestalten, dass der dynamische Druckanteil in der drallbehafteten, durch das Laufrad des Axialventilators erzeugten Strömung nach dem Laufrad durch Verzögerung des Geschwindigkeitsvektors über nahezu den kompletten Kennlinienbereich des Axialventilators teilweise in statischen Druck umgewandelt wird, so dass die Austrittsverluste des Ventilators deutlich reduziert werden und folglich der statische strömungstechnische Wirkungsgrad zunimmt und bei gleicher Luftleistung der Schallleistungspegel abnimmt.

Der Profilverlauf der Nachleitstreben über die radiale Erstreckung zur Reduzierung der Austrittsverluste über einen großen Bereich der Kennlinie erfolgt dadurch, dass für die Nachleitstreben jeweils ein vorzugsweise vierstelliges NACA-Profil als Basis verwendet wird.

NACA-Profile sind zweidimensionale Querschnitte von Tragflächenprofilen für Flugzeugtragflächen, die vom National Advisory Committee for Aeronautics (NACA, später NASA) für den Entwurf von Tragflächen entwickelt wurden.

Bei vierstelligen NACA-Profilen repräsentieren die vier Ordnungsziffern drei geometrische Werte des Profils (Profilwölbung, Wölbungsrücklage und maximale Profildicke), die für die Eigenschaften des Profils ausschlaggebend sind. Die Parameter der vier Ziffern, die das jeweilige NACA-Profil bezeichnen, können in Gleichungen eingesetzt werden, die der Berechnung des genauen Querschnitts der Tragfläche und ihrer Eigenschaften dienen.

Das Konstruktionsprinzip der NACA-Profile beruht auf Kreisen, die auf einer Linie, der Skelett- oder Profilmittellinie, gezeichnet werden. Um diese Kreise wird tangential eine Profilformlinie erstellt.

Die vierstellige NACA-Serie definiert das Profil durch:

- die 1. Ziffer, für die maximale Profilwölbung f - angegeben in Prozent, bezogen auf die Profilsehne bzw. bezogen auf die Länge der Profilsehne

- die 2. Ziffer, für die Wölbungsrücklage $x_f$ - in Zehnteln der Profilsehne bzw. in Zehnteln der Länge der Profilsehne

- die 3. und 4. Ziffer bezeichnet die maximale Profildicke d - angegeben in Prozent, bezogen auf die Profilsehne

Die Dickenrücklage $x_d$ der vierstelligen NACA-Profile liegt für gewöhnlich bei ca. 30%.

Ein NACA-Profil als Basis zur Auslegung der Nachleitstreben ermöglicht es, die einzelnen, das NACA-Profil bestimmenden Parameter, wie die Wölbungs- und Dickenverteilung, separat voneinander zu variieren, so dass ein optimales Profil in Abhängigkeit der Anströmsituation der Vorderkante der Nachleitstreben und in Abhängigkeit des Arbeits- bzw. Betriebspunktes des Axialventilators und der radialen Position r ermittelt werden kann.

Beispielsweise werden die maximale Profilwölbung f, die Wölbungsrücklage $x_f$, die Profildicke d, die Dickenrücklage $x_d$, der Anstellwinkel $\alpha$ und die Erstreckung $L_{ax,N}$ jeder der Nachleitstreben für einen vorbestimmten Betriebspunkt des Axialventilators bzw. eine in dem Betriebspunkt erzeugte Strömung in Abständen von wenigen Millimetern oder bezogen auf ein Verhältnis zur Gesamtlänge der Nachleitstreben in Radialrichtung entlang des Radius r bestimmt und zwischen den so bestimmten Werten fließende Übergänge hergestellt. Die Abstände können zudem entlang des Radius r variiert werden.

Eine vorteilhafte Variante der Nachleitvorrichtung sieht vor, dass die Vorderkante jeder der Nachleitstreben zu einer Anströmseite des Axialventilators weist und dass die Hinterkanten jeder der Nachleitstreben zu einer Abströmseite des Axialventilators weist. Im jeweiligen Querschnitt der Nachleitstreben ist die Vorderkante mit der Hinterkante direkt und geradlinig durch die Profilsehne sowie in einem Bogen durch die gekrümmte bzw. gebogene Skelettlinie verbunden. Die Vorderkante und/oder die Hinterkante sind zudem vorzugsweise jeweils voll verrundet und gehen dadurch jeweils über einen Radius in die Oberseite und die Unterseite der Nachleitstrebe über.

Eine weitere vorteilhafte Ausführungsvariante der Nachleitvorrichtung sieht vor, dass die Vorderkante der Nachleitstrebe vollständig bzw. über ihre gesamte Erstreckung in einer ersten Ebene liegt, die Hinterkante der Nachleitstrebe in einer zweiten Ebene liegt und die erste und die zweite Ebene parallel zueinander sind. Zudem ist die Erstreckung $L_{ax,N}$ der Nachleitstrebe bzw. der Nachleitstreben entlang der zu der Drehachse parallelen Axialrichtung z des Axialventilators, was insbesondere auch dem Abstand der ersten zu der zweiten Ebene entspricht, über die Erstreckung der Nachleitstrebe in Radialrichtung konstant.

Vorzugsweise sind zudem die erste und die zweite Ebene jeweils orthogonal zu der Drehachse.

Die jeweilige Vorderkante der Nachleitstreben ist erfindungsgemäß mehrfach gekrümmt. Dies ergibt sich insbesondere durch eine Variation des Anstellwinkels $\alpha$. Vorzugsweise ist bei einer weiteren Ausführung zudem vorgesehen, dass die Hinterkante der Nachleitstrebe einen geradlinigen Verlauf aufweist.

Besonders günstige Strömungsverhältnisse ergeben sich bei der Nachleitvorrichtung, wenn das Verhältnis $r_i/r_a$ des inneren Radius $r_i$ zu dem äußeren Radius $r_a$ zwischen 0,40 und 0,60 und vorzugsweise zwischen 0,45 und 0,55 ist. Die Nachleitstreben erstrecken sich in Umfangsrichtung um die Drehachse entlang eines Kreissegments, wobei eine Länge der Erstreckung entlang des Kreissegments als Kreissegmentlänge $l_s$ abhängig vom Radius r ist. Die Kreissegmentlänge $l_s$ ergibt sich zu $l_s(r)= L_{ax,N}(r)/(\tan \alpha(r))$. Wird berücksichtigt, dass die Erstreckung $L_{ax,N}$ der Nachleitstreben entlang der zu der Drehachse parallelen Axialrichtung z des Axialventilators vorzugsweise konstant ist, ergibt sich für die Kreissegmentlänge $l_s$: $l_s(r)= L_{ax,N}/(\tan \alpha(r))$

Bei einer weiteren vorteilhaften Ausführung der Nachleitvorrichtung ist vorgesehen, dass sich der Anstellwinkel $\alpha$ von dem inneren Radius $r_i$ zu dem äußeren Radius $r_a$ in Abhängigkeit des Radius r ändert. Hierbei steigt der Anstellwinkel $\alpha$ ausgehend von dem inneren Radius $r_i$ bis zu einem globalen Maximum an, wobei der Anstieg insbesondere zumindest abschnittsweise linear ist. Das Maximum liegt insbesondere bei einem Verhältnis $r/r_a$ des Radius r zu dem äußeren Radius $r_a$ zwischen 0,65 und 0,85, vorzugsweise zwischen 0,71 und 0,77. Ausgehend von dem globalen Maximum fällt bzw. sinkt der Anstellwinkel $\alpha$ bis zu einem globalen Minimum ab, wobei das globale Minimum vorzugsweise bei dem äußeren Radius $r_a$ liegt.

Für die den Querschnitt der Nachleitstreben bzw. für die das NACA-Profil bestimmenden Parameter gilt bei einer vorteilhaften Variante der Nachleitvorrichtung:

- Die maximale Profilwölbung f ist zwischen 0,07 und 0,09, vorzugsweise zwischen 0,077 und 0,083.

- Die Wölbungsrücklage $x_f$ ist zwischen 0,40 und 0,50, vorzugsweise zwischen 0,43 und 0,47.

- Die Dickenrücklage $x_d$ ist zwischen 0,30 und 0,40, vorzugsweise zwischen 0,33 und 0,37.

Darüber hinaus ist vorzugsweise vorgesehen, dass die maximale Profilwölbung f und/oder die Wölbungsrücklage $x_f$ und/oder die Dickenrücklage $x_d$ über den Verlauf der Nachleitstrebe in Radialrichtung r konstant ist.

Der Verlauf der Skelettlinie ist bei einer ebenfalls vorteilhaften Variante der Nachleitvorrichtung aus zwei ineinander übergehenden Parabelbögen zusammengesetzt, so dass für den Verlauf der Skelettlinie entlang der Profilsehne als Funktion f gilt:

$$f(x) = 1 - \left(\frac{x_f - x}{x_f}\right)^2, x \leq x_f$$

$$f(x) = 1 - \left(\frac{x - x_f}{1 - x_f}\right)^2, x > x_f .$$

Der Parameter x entspricht der Position entlang der Profilsehne der Nachleitstrebe, welche die Vorderkante und die Hinterkante direkt und geradlinig verbindet.

Vorzugsweise ist vorgesehen, dass die Profildicke d des NACA-Profils bzw. des Querschnitts einer der Nachleitstreben an dem äußeren Radius $r_a$ in einem Verhältnis v von der Profildicke d an dem inneren Radius $r_i$ ist, so dass gilt $d(r_a) = d(r_i) \cdot v$. Das Verhältnis v liegt vorzugsweise zwischen 0,7 und 0,9 und ist insbesondere 0,8.

Ferner sieht eine vorteilhafte Ausbildungsvariante der Nachleitvorrichtung vor, dass sich die Profildicke d zwischen dem äußeren Radius $r_a$ und dem inneren Radius $r_i$ linear ändert.

Ein weiterer Aspekt der Erfindung betrifft zudem einen Axialventilator mit einem um eine Drehachse rotierbaren Laufrad, welches ausgebildet ist, eine Strömung von einer Anströmseite des Axialventilators zu einer Abströmseite des Axialventilators zu erzeugen, wobei abströmseitig des Laufrades eine vorstehend beschriebene erfindungsgemäße Nachleitvorrichtung angeordnet ist.

Eine vorteilhafte Variante des Axialventilators sieht zudem vor, dass das Laufrad eine Nabe und eine Vielzahl von Laufradschaufeln aufweist, welche jeweils mit der Nabe verbunden sind und sich von der Nabe in Radialrichtung der Drehachse nach radial außen erstrecken.

Ferner weist das Laufrad vorzugsweise einen Schleuderring auf, welcher die Nabe ringförmig umläuft und mit welchem die Laufradschaufeln verbunden sind. Entsprechend erstrecken sich die Laufradschaufeln jeweils von der Nabe nach radial außen zu dem Schleuderring und verbinden diese miteinander.

Die Laufradschaufeln weisen darüber hinaus vorzugsweise jeweils eine zu der Anströmseite weisende Vorderkante auf, wobei die Vorderkante einen konvexen Verlauf hat, so dass die Laufradschaufeln an ihrer jeweiligen Vorderkante gebogen ausgebildet sind.

Eine vorteilhafte Variante des Axialventilators sieht zudem vor, dass die Laufradschaufeln jeweils eine zu der Abströmseite weisende Hinterkante aufweisen, wobei die Hinterkante einen geradlinigen Verlauf hat.

Der Axialventilator weist gemäß einer ebenfalls vorteilhaften Variante ferner ein durchströmbares Gehäuse und eine mittig an der Drehachse in dem Gehäuse angeordnete Zentraleinheit auf, an welcher das Laufrad um die Drehachse drehbar gelagert angeordnet ist. Die Nachleitstreben der Nachleitvorrichtung erstrecken sich von der Zentraleinheit nach radial außen zu dem Gehäuse des Axialventilators und sind mit der Zentraleinheit und dem Gehäuse des Axialventilators verbunden. Das Gehäuse der Nachleitvorrichtung und das Gehäuse des Axialventilators sind vorzugsweise integral miteinander ausgebildet. Alternativ oder zusätzlich kann das Gehäuse der Nachleitvorrichtung auch einen Abschnitt des Gehäuses des Axialventilators bilden.

Vorzugsweise ist in der Zentraleinheit eine Antriebseinheit angeordnet, durch welche die Nabe des Laufrades und das Laufrad bzw. die Laufradschaufeln um die Drehachse antreibbar sind. Zur Stromversorgung der Antriebseinheit weist zumindest eine der Nachleitstreben eine Aufnahme auf, entlang der zumindest ein elektrischer Leiter zum Anschluss an die Antriebseinheit von dem Gehäuse zu der Zentraleinheit aufnehmbar bzw. führbar ist. Die Aufnahme kann als eine oder mehrere, beispielsweise hakenförmige, Halterungen ausgeführt sein, welche eine Auflagefläche für ein Kabel bereitstellen. Alternativ kann jedoch auch zumindest eine Nachleitstrebe hohl ausgebildet sein, so dass sich der oder die elektrischen Leiter durch die zumindest eine hohle Nachleitstrebe von dem Gehäuse in die Zentraleinheit erstrecken können. Elektrische Leiter können auch unmittelbar in die vorzugsweise aus Kunststoff gebildeten Nachleitstreben eingegossen bzw. von diesen umspritzt sein.

Das Gehäuse des Axialventilators ist bei einer vorteilhaften Variante als ein zylindrischer Wandring ausgebildet, welcher vorzugsweise Befestigungsabschnitte zur Fixierung des Axialventilators ausbildet.

Der zylindrische Wandring weist insbesondere eine zylindrische Öffnung auf, in welcher das Laufrad, die Zentraleinheit und die Nachleiteinrichtung angeordnet sind, wobei sich die Nachleitstreben von dem Wandring zu der Zentraleinheit erstrecken.

Bei einer vorteilhaften Variante des Axialventilators ist vorgesehen, dass die Zentraleinheit eine Abdeckung mit einer zu der Abströmseite weisenden Fläche aufweist. Das Gehäuse des Axialventilators weist ferner ebenfalls eine zu der Abströmseite weisende Fläche auf. Die Hinterkanten der Nachleitstreben schließen bündig mit den abströmseitigen Flächen der Abdeckung der Zentraleinheit und des Gehäuses des Axialventilators ab.

Die Hinterkante einer Laufradschaufel verläuft in einer dritten, zu der Drehachse schrägen Ebene, welche mit einer vierten, zu der Drehachse orthogonalen Ebene einen Winkel β einschließt. Für den Abstand $D_{ax,LN}$ der Hinterkante der Laufradschaufel zu den Vorderkanten der Nachleitstreben in Axialrichtung z gilt $D_{ax,LN}(r) = D_{ax,min,LN} + (\tan β \cdot (r - r_i))$, mit $D_{ax,min,LN}$ als kleinstem axialen Abstand der Hinterkante der Laufradschaufel angrenzend an die Nabe zu der Vorderkante der Nachleitstrebe.

Der Winkel β liegt insbesondere zwischen 2° und 6° und vorzugsweise zwischen 3,5° und 4,5°.

Aufgrund des vom Betriebspunkt des Axialventilators, der entsprechenden Radialposition r und des axialen Abstandes $D_{ax,LN}(r)$ der Hinterkante der jeweiligen Laufradschaufel zur Vorderkante der Nachleitstreben abhängigen Geschwindigkeitsvektors und der Wechselwirkung zwischen Laufrad bzw. den Laufradschaufeln und den Nachleitstreben, ist es nicht möglich, über einfache Zusammenhänge der Geschwindigkeitsdreiecke zwischen Laufrad und Nachleitsystem in einem Betriebspunkt und einem Kreisbogenprofilansatz die Nachleitstreben über ihre radiale Erstreckung so zu definieren, dass eine maximale Wirkungsgradsteigerung über den Großteil der Kennlinie erreicht wird. Um dies zu überwinden ist vorgesehen, dass die Parameter des Profilverlaufs der Nachleitstreben und insbesondere die Parameter f, $x_f$, d(r), $x_d$, Anstellwinkel $α(r)$, axialen Erstreckung $L_{ax,N}$ für mehrere vorbestimmte radiale Zylinderschnitte auf die in dem vorbestimmten Betriebspunkt in den jeweiligen Zylinderschnitten herrschende Strömung angepasst bzw. optimiert werden. Dies kann beispielsweise mittels einer CFD-Optimierung auf mehreren Widerstandsparabeln der Kennlinie des Axialventilators mit der Vorgabe den Wirkungsgrad zu steigern erreicht werden, wobei die Größen bzw. Parameter f, $x_f$, d(r), $x_d$, $α(r)$, $L_{ax,N}$ innerhalb vorbestimmter Grenzen bzw. Intervallgrenzen variiert und angepasst werden.

Der Axialventilator weist bei einer ebenfalls vorteilhaften Ausführungsform ferner eine erste, der Anströmseite nächstliegende Fläche, welche vorzugsweise eine zu der Anströmseite weisende Fläche der Nabe ist, und eine zweite, der Abströmseite nächstliegende Fläche auf, welche vorzugsweise eine zu der Abströmseite weisende Fläche der Zentraleinheit und/oder des Gehäuses des Axialventilators ist. Eine Gesamthöhe $H_{ges}$ des Axialventilators ist von einem Abstand der ersten zu der zweiten Fläche in Axialrichtung bzw. entlang der Drehachse bestimmt. Ein Verhältnis $L_{ax,N}/H_{ges}$ der Erstreckung $L_{ax,N}$ der Nachleitstreben zu der Gesamthöhe $H_{ges}$ ist hierbei vorzugsweise zwischen 0,20 und 0,35 und insbesondere zwischen 0,25 und 0,30.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1    ein Axialventilator mit Nachleitvorrichtung in perspektivischer Darstellung;

Fig. 2    ein Axialventilator mit Nachleitvorrichtung in einer Ansicht von der Abströmseite;

Fig. 3    eine Nachleitvorrichtung in einer Ansicht von der Anströmseite;

Fig.4    eine Teilansicht eines Axialventilators im Längsschnitt;

Fig. 5    ein Querschnitt einer Laufradschaufel und einer Nachleitstrebe bei einem ersten Radius $r_1$ und einem zweiten Radius $r_2$;

Fig. 6    Verlauf des Anstellwinkels α und die Kreissegmentlänge $I_s$ entlang deren sich die Nachleitstrebe in Umfangsrichtung um die Drehachse erstreckt, jeweils in Abhängigkeit des Radius r im Verhältnis zu einem äußeren Radius $r_a$;

Fig. 7    eine Nachleitstrebe im Querschnitt;

Fig. 8    Verlauf einer Skelettlinie einer Nachleitstrebe an dem zweiten Radius $r_2$;

Fig. 9    Verlauf der Profildicke d entlang der Skelettlinie an einem inneren Radius $r_i$ und dem äußeren Radius $r_a$;

Die Figuren sind beispielhaft schematisch. Gleiche Bezugszeichen in den Figuren weisen auf gleiche funktionale und/oder strukturelle Merkmale hin.

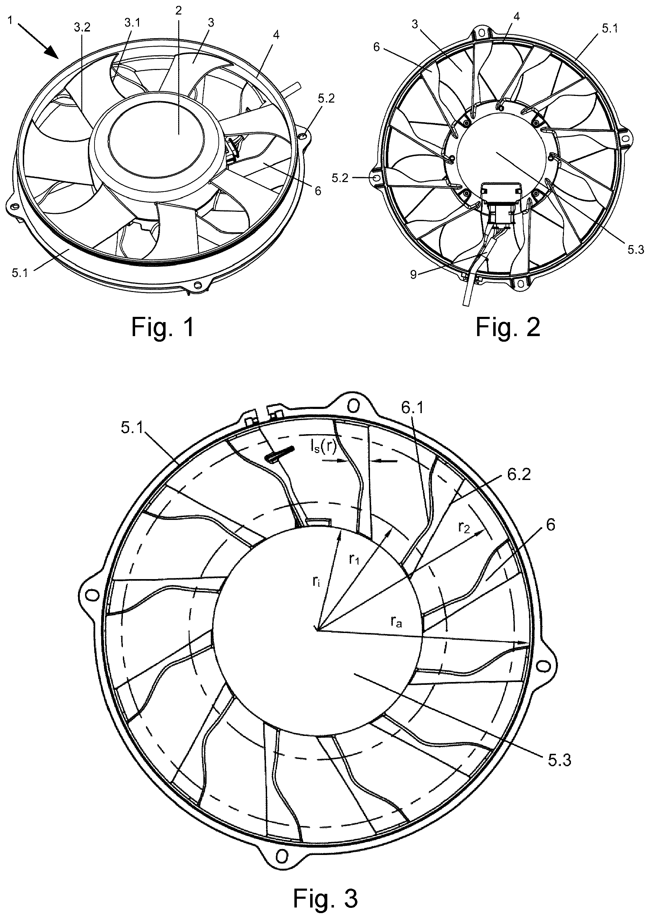

Figur 1 zeigt einen Axialventilator 1 in perspektivischer Ansicht von der Anströmseite aus. Der Axialventilator 1 ist insbesondere im Fahrzeugbereich und vorzugsweise im Nutzfahrzeugbereich, beispielsweise als Teil einer Aufdachklimaanlage eines Buses, vorgesehen.

Der Axialventilator weist ein Laufrad mit einer zentralen Nabe 2, einer Vielzahl von Laufradschaufeln 3 mit vorwärts gesichelten Vorderkanten 3.1 und geraden Hinterkanten 3.2 sowie einen die Laufradschaufeln umlaufenden Schleuderring 4 auf. Die Laufradschaufeln 3 erstrecken sich von ihrer jeweiligen Schaufelwurzel an der Nabe 2 radial nach außen in Richtung des umlaufenden Schleuderringes 4, so dass Schleuderring 4 und die Nabe 2 durch die Laufradschaufeln 3 miteinander verbunden sind. Der Axialventilator 1 weist darüber hinaus einen Elektromotor als Antriebseinheit sowie eine zugehörige Elektronik auf, welche in einer Zentraleinheit angeordnet sind und durch welche das Laufrad rotatorisch um die Drehachse 7 antreibbar ist, welche in den Figuren 1 und 2 nicht dargestellt ist. Ferner weist der Axialventilator 1 einen den Schleuderring 4 umlaufenden zylindrischen Wandring 5.1 als Gehäuse auf, an welchem umfänglich verteilte Befestigungsabschnitte 5.2 vorgesehen sind.

Wie in der in Figur 2 abgebildeten Ansicht, welche den Axialventilator von der Abströmseite aus zeigt, ist zentriert zu dem Wandring 5.1 und dem Schleuderring 4 eine Abdeckung 5.3 vorgesehen, durch welche die Zentraleinheit abgedeckt wird. Die von der Anströmseite in Richtung der Abströmseite nach den Laufradschaufeln 3 angeordneten und strömungstechnisch optimierten Nachleitstreben 6 erstrecken sich von der Abdeckung 5.3 der Zentraleinheit radial nach außen zu dem zylindrischen Wandring 5.1, wobei ein Gehäuse des Axialventilators 1 und ein Gehäuse der Nachleitvorrichtung bei der gezeigten Ausführungsform integral durch den zylindrischen Wandring 5.1 gebildet werden. Die Nachleitstreben 3 bilden zugleich Tragstreben, welche die Zentraleinheit mit ihrer Abdeckung 5.3 zentriert in dem zylindrischen Wandring 5.1 halten.

Eine oder mehrere der Nachleitstreben 6 kann bzw. können, wie in Figur 2 dargestellt, ausgebildet sein, beispielsweise durch eine dafür vorgesehene Auflagefläche oder Montageöffnungen, eine Zuleitung 9 zur Steuerung und/oder Stromversorgung der in der Zentraleinheit und der Abdeckung 5.3 aufgenommen Antriebseinheit von dem zylindrischen Wandring 5.1 zu der Abdeckung 5.3 bzw. zu der Zentraleinheit zu führen.

In Fig. 3 ist der Axialventilator 1 in einer Draufsicht von der Anströmseite aus dargestellt, wobei das Laufrad zur besseren Veranschaulichung der Nachleitvorrichtung ausgeblendet ist. Durch das Fehlen des Laufrads sind in Figur 3 die mehrfach gekrümmten Vorderkanten 6.1 der Nachleitstreben 6 sichtbar sowie die geraden Hinterkanten 6.2. Die Nachleitstrebe 6, an welcher die Auflageflächen für die Zuleitung 9 vorgesehen sind, weist eine mehrfach gekrümmte Hinterkante auf, um eine Strömungsbeeinflussung durch die Zuleitung 9 zumindest teilweise zu kompensieren. Der Profilverlauf der Nachleitstreben 6 in radialer Erstreckung beginnt an dem inneren Radius $r_i$, welcher dem Radius der Abdeckung 5.3 entspricht, und endet an dem äußeren Radius $r_a$, welcher dem Innenradius des zylindrischen Wandrings 5.1 entspricht.

Im Intervall $[r_i, r_a]$ sind weitere Profilverläufe auf mehreren Zylinderabschnitten definiert, wobei in Figur 3 zur Veranschaulichung zwei weitere radiale umfängliche Zylinderschnittpositionen mit den Radien $r_1$ und $r_2$ angedeutet sind. Die umfängliche Kreissegmentlänge $l_s(r)$ der Nachleitstreben 6 von ihrer jeweiligen Vorderkante 6.1 zu ihrer jeweiligen Hinterkante 6.2 variiert in Abhängigkeit des Radius r.

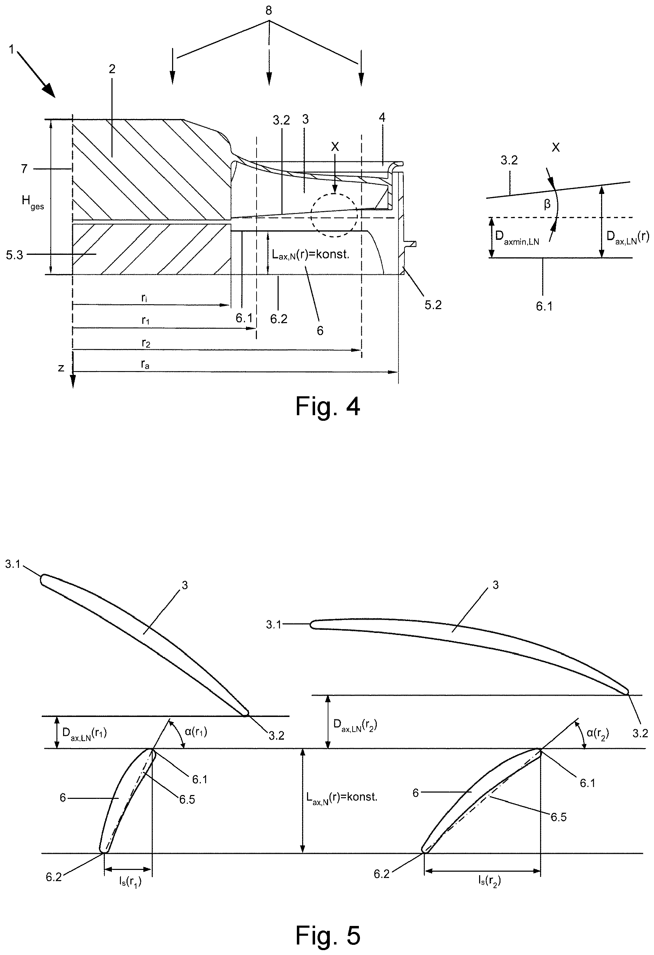

Fig. 4 zeigt eine Teilansicht des Axialventilators 1 im Schnitt mit der Drehachse 7 und der Hauptanströmungsrichtung 8, welche durch Pfeile angedeutet ist. Wie dargestellt, ist die axiale Erstreckung $L_{ax,N}(r)$ der Nachleitstreben 6 konstant. Die Hinterkante 6.2 und die Vorderkante 6.1 der Nachleitstreben 6 verlaufen jeweils in einer Ebene rechtwinklig zur Drehachse 7 und die Hinterkante 6.2 schließt in axialer Erstreckung z bündig mit dem zylindrischen Wandring 5.1 und der Abdeckung 5.3 der Zentraleinheit ab.

Der axiale Abstand $D_{ax,LN}(r)$ der Hinterkante 3.2 der Laufradschaufeln 3 zu der Vorderkante 6.1 der Nachleitstreben 6 ist in der Vergrößerung X dargestellt. Dieser Abstand hat großen Einfluss auf die Anströmung der Vorderkante 6.1 der Nachleitstreben 6, auf das Geräuschverhalten und die Gesamthöhe $H_{ges}$ des Axialventilators 1. Das Geräuschniveau ist ein entscheidendes Kriterium bei der Auslegung des Axialventilators 1, welches mit größerem Abstand $D_{ax,LN}(r)$ verbessert werden kann. Aufgrund der generellen Anforderung die Gesamthöhe $H_{ges}$ des Axialventilators 1 zu minimieren, muss ein Kompromiss zwischen einem optimierten Geräuschniveau und der Gesamthöhe $H_{ges}$ gefunden werden. Diese gegensätzliche Anforderungen werden dadurch gelöst, indem der Abstand über die radiale Erstreckung über die Funktion im Intervall $[ri, ra]$ zunimmt. Der Neigungswinkel β zwischen der Hinterkante 3.2 der Laufradschaufeln und der Vorderkante 6.1 der Nachleitstreben sorgt dafür, dass der Abstand linear über den Radius r zunimmt, so dass die steigende Geräuschintensität aufgrund der höheren Strömungsgeschwindigkeit über die radiale Erstreckung zumindest zum Teil kompensiert werden kann.

In Fig. 5 sind die Profilverläufe in den Zylinderschnitten in den radialen Positionen bei $r_1$ und $r_2$ dargestellt, wobei links der Querschnitt durch die Laufradschaufel 3 und die Nachleitstrebe 6, welche aufgrund ihrer Form auch als Nachleitschaufel bezeichnet werden kann, bei dem ersten Radius $r_1$ und rechts der Querschnitt durch die selbe Laufradschaufel 3 und die selbe Nachleitstrebe 6 bei dem zweiten Radius $r_2$ dargestellt ist. Hierbei wird deutlich, dass der Anstellwinkel $\alpha(r)$ der einzelnen Profile durch den entsprechenden Geschwindigkeitsvektor an der Vorderkante 6.1 der Nachleitstreben 6 aus der Anpassung an die jeweilige Anströmsituation in dem gewählten bzw. vorbestimmten Betriebspunkt stark variiert.

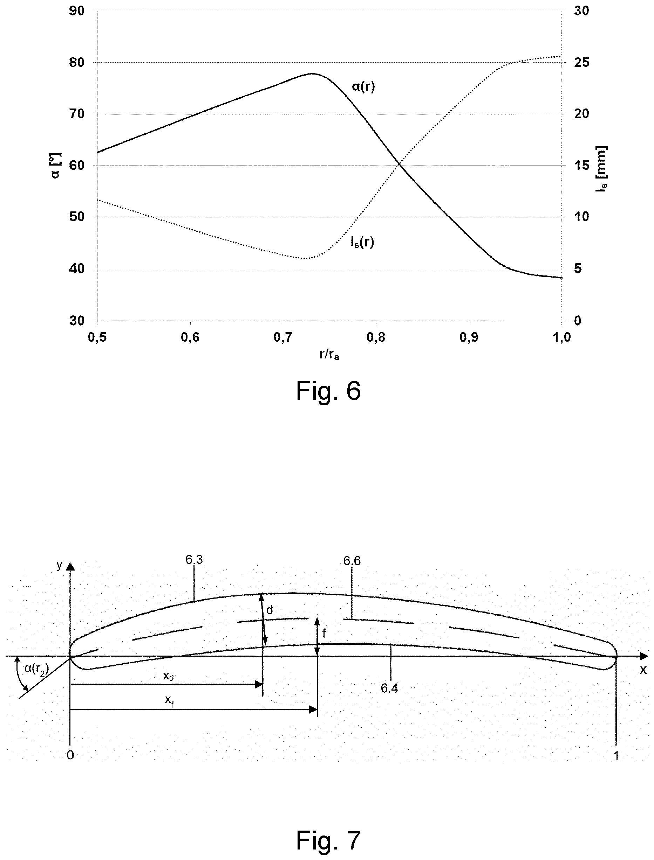

Der Verlauf des Anstellwinkels $\alpha(r)$ und der Kreissegmentlänge $l_s(r)$, welche zu dem Anstellwinkel $\alpha(r)$ in Zusammenhang steht, ist in Fig. 6 dargestellt. Hierbei zeigt sich zunächst ein linearer Anstieg des Anstellwinkels $\alpha$ beginnend bei $r_i$ bis zum Hochwendepunkt zwischen $r/r_a$ von 0,65 und 0,85 und eine sich anschließende stetige Abnahme bis zum Minium von $\alpha(r)$ bei dem äußeren Radius $r_a$. Die Funktion $l_s(r)$ der Kreissegmentlänge der Nachleitstreben 6 verläuft entsprechend ihrer Definition gegenläufig.

Fig. 7 zeigt den detaillierten NACA-Profilverlauf bzw. Querschnitt der bzw. einer der Nachleitstreben bei dem zweiten Radius $r_2$. Die x-Achse erstreckt sich entlang der Profilsehne 6.5 der Nachleitstrebe, welche dadurch verdeckt ist, wobei die Werte entlang der x-Achse keine absoluten Werte sind, sondern das Verhältnis zu der Gesamtlänge der Profilsehne 6.5 angeben. An der y-Achse ist die Profilwölbung f des Querschnitts entlang der Profilsehne 6.5 ablesbar, was dem Abstand zwischen der Skelettlinie 6.6 zu der Profilsehne 6.5 bzw. zu der x-Achse entspricht.

Für den vorbestimmten Betriebspunkt des Axialventilators ergibt sich, dass eine maximale Profilwölbung f vorzugsweise zwischen 0,07 und 0,09 ist und eine Wölbungsrücklage $x_f$ vorzugsweise zwischen 0,40 und 0,50 ist. Die für den Betriebspunkt bestimmten Werte für die maximale Profilwölbung f und die Wölbungsrücklage $x_f$ sind vorzugsweise über die Erstreckung der Nachleitstreben 6 in Radialrichtung r und somit bei jedem der einzelnen Zylinderprofilschnitte konstant.

Zur Modellierung der Oberseite 6.3 der Nachleitstrebe und der Unterseite 6.4 der Nachleitstrebe 6 ist die Dickenverteilung d des Profils über eine symmetrische Versatzkurve in Bezug auf die jeweilige Skelettlinie 6.6 überlagert. Die Dickenrücklage $x_d$ sollte zwischen 0,3 und 0,4, liegen und ist vorzugsweise über die radiale Erstreckung der Nachleitstreben 6 und somit bei jedem der Zylinderprofilschnitte analog zur Wölbungsrücklage $x_f$ konstant.

In Figur 7 ist linksseitig zudem der Anstellwinkel $\alpha(r_2)$ für den zweiten Radius $r_2$ eingezeichnet, was einem für die Anströmung durch die in dem Betriebspunkt des Axialventilators 1 erzeugte Strömung bei dem zweiten Radius $r_2$ optimierten Anstellwinkel $\alpha$ entspricht.

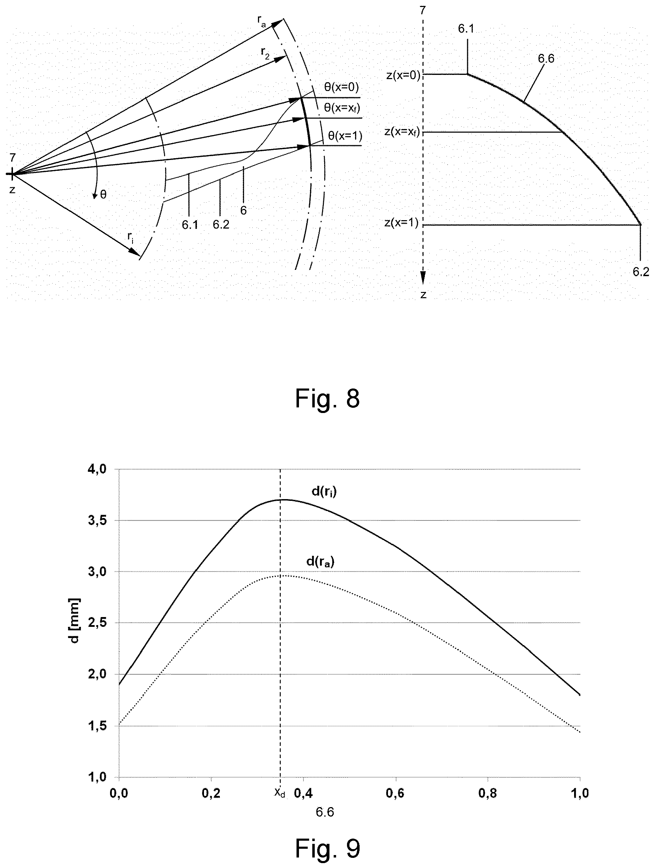

Die Skelettlinie 6.6 kann in Figur 7 als Funktion f(x) beschrieben werden, wobei sich diese vorzugsweise aus zwei abschnittsweise geltenden Parabelbögen zusammensetzt. Diese zwei Funktionen der Skelettlinie 6.6 können über eine Umrechnung in Zylinderkoordinaten r, $\theta$ und der entsprechenden Axialposition z in den jeweiligen Zylinderschnitten abgebildet werden. Beispielhaft zeigt die Fig. 8 die schematische Darstellung dieser Umrechnung im Zylinderschnitt an der radialen Position gleich dem zweiten Radius $r_2$, also bei $r = r_2$.

In Fig. 9 sind die Profildickenverteilungen $d(r_i)$ und $d(r_a)$ über die Skelettlinie 6.6 dargestellt für welche vorzugsweise der Zusammenhang $d(r_a) = d(r_i) \cdot 0,8$ gilt. Die weiteren Profildickenverteilungen d(r) im Intervall $[r_i, r_a]$ sind weiter vorzugsweise entsprechend linear skaliert um den Materialeinsatz der Nachleitstreben 6 zu reduzieren. Die Dickenrücklage $x_d$ sollte zwischen 0,30 und 0,40 liegen und ist bei einer vorteilhaften Weiterbildung über die radiale Erstreckung der Nachleitstreben 6 und somit bei jedem der einzelnen Zylinderprofilschnitte analog zur Wölbungsrücklage $x_f$ konstant.

Bezugszeichenliste:

| 1 | Axialventilator |
| 2 | Nabe |
| 3 | Laufradschaufel |
| 3.1 | Vorderkante der Laufradschaufel |
| 3.2 | Hinterkante der Laufradschaufel |
| 4 | Schleuderring |
| 5.1 | zylindrischer Wandring |
| 5.2 | Befestigungsabschnitte |
| 5.3 | Abdeckung der Zentraleinheit |
| 6 | Nachleitstrebe |
| 6.1 | Vorderkante der Nachleitstrebe |
| 6.2 | Hinterkante der Nachleitstrebe |
| 6.3 | Oberseite der Nachleitstrebe |
| 6.4 | Unterseite der Nachleitstrebe |
| 6.5 | Profilsehne |
| 6.6 | Skelettlinie |
| 7 | Drehachse |
| 8 | Hauptströmungsrichtung |
| 9 | Zuleitung |
| z | Axialrichtung |
| $r_i$ | innerer Radius |
| $r_a$ | äußerer Radius |
| r | Radius um die Drehachse (7) |
| $r_1$ | erster Radius |
| $r_2$ | zweiter Radius |
| $l_s(r)$ | Kreissegmentlänge der Nachleitstrebe (6) von der Vorderkante (6.1) zu der Hinterkante (6.2) in Abhängigkeit des Radius (r) in Umfangsrichtung um die Drehachse (7) |
| $L_{ax,N}(r)$ | axiale Erstreckung der Nachleitstrebe (6) entlang der Axialrichtung z in Abhängigkeit des Radius (r) |
| $D_{ax,LN}(r)$ | axialer Abstand der Hinterkante (3.2) der Laufradschaufel (3) zu der Vorderkante (6.1) der Nachleitstrebe (6) entlang der Axialrichtung z in Abhängigkeit des Radius (r) |
| $D_{ax,min,LN}$ | kleinster axialer Abstand der Hinterkante (3.2) der Laufradschaufel (3) zu der Vorderkante (6.1) der Nachleitstrebe (6) |
| $H_{ges}$ | Gesamthöhe des Axialventilators (1) entlang der Axialrichtung z |
| f | maximale Profilwölbung des Profils der Nachleitstrebe (6) |
| $x_f$ | Wölbungsrücklage des Profils der Nachleitstrebe (6) |
| d(r) | Profildicke des Profils der Nachleitstrebe (6) in Abhängigkeit des Radius (r) |
| $x_d$ | Dickenrücklage des Profils der Nachleitstrebe (6) |
| $\alpha(r)$ | Anstellwinkel der Nachleitstrebe (6) in Abhängigkeit des Radius (r) |
| $\beta$ | Neigungswinkel zwischen der Hinterkante (3.2) der Laufradschaufel (3) und der Vorderkante (6.1) der Nachleitstrebe (6) |

**Patentansprüche**

1.  Nachleitvorrichtung ausgebildet zur Anordnung in eine abströmseitige Strömung eines Laufrades eines Axialventilators (1), wobei

    die Nachleitvorrichtung ein Gehäuse und eine Vielzahl von Nachleitstreben (6) aufweist, welche jeweils mit dem Gehäuse verbunden sind und welche jeweils eine Vorderkante (6.1) und eine Hinterkante (6.2) aufweisen, wobei sich jede der Nachleitstreben (6) in Radialrichtung einer Drehachse (7) des Laufrades des Axialventilators (1) von einem inneren Radius $r_i$ zu

einem äußeren Radius $r_a$ erstreckt, wobei jede der Nachleitstreben (6) im Querschnitt als ein NACA-Profil ausgebildet ist, welches zumindest durch seine maximale Profilwölbung f, seine Wölbungsrücklage $x_f$, seine Profildicke d und seine Dickenrücklage $x_d$ bestimmt ist, wobei jede der Nachleitstreben eine Erstreckung $L_{ax,N}$ entlang einer zu der Drehachse (7) parallelen Axialrichtung z des Axialventilators (1) aufweist, wobei

die Ausrichtung jeder der Nachleitstreben (6) jeweils durch einen Anstellwinkel a bestimmt ist, welcher der Winkel zwischen einer zu der Drehachse (7) orthogonalen Ebene und einer Profilsehne (6.5) der Nachleitstrebe (6) ist, wobei die maximale Profilwölbung f, die Wölbungsrücklage $x_f$, die Profildicke d, die Dickenrücklage $x_d$, der Anstellwinkel $\alpha$ und die Erstreckung $L_{ax,N}$ jeder der Nachleitstreben (6) in vorbestimmten Abständen entlang der Radialrichtung von dem inneren Radius $r_i$ zu dem äußeren Radius $r_a$ auf einen vorbestimmten Betriebspunkt oder Betriebsbereich des Axialventilators (1) und der in dem Betriebspunkt oder Betriebsbereich von dem Laufrad erzeugten Strömung angepasst sind, wobei

zumindest die maximale Profilwölbung f, die Wölbungsrücklage $x_f$, die Profildicke d, die Dickenrücklage $x_d$, der Anstellwinkel $\alpha$ oder die Erstreckung $L_{ax,N}$ einer Nachleitstrebe (6) entlang ihres Verlaufs in Radialrichtung zumindest abschnittsweise variiert, und wobei Übergänge zwischen den Abschnitten einer Nachleitstrebe (6) fließend ausgebildet sind, wobei

die jeweilige Vorderkante (6.1) jeder der Nachleitstreben (6) mehrfach gekrümmt ist.

2. Nachleitvorrichtung nach Anspruch 1, wobei

die Vorderkante (6.1) der Nachleitstrebe (6) vollständig in einer ersten Ebene liegt, die Hinterkante (6.2) der Nachleitstrebe (6) in einer zweiten Ebene liegt und die erste und die zweite Ebene parallel zueinander sind, und wobei die Erstreckung $L_{ax,N}$ entlang der zu der Drehachse (7) parallelen Axialrichtung z des Axialventilators (1) über die Erstreckung der Nachleitstrebe (6) in Radialrichtung konstant ist.

3. Nachleitvorrichtung nach Anspruch 2, wobei die erste und die zweite Ebene jeweils orthogonal zu der Drehachse (7) sind.

4. Nachleitvorrichtung nach einem der vorhergehenden Ansprüche, wobei die Hinterkante (6.2) der Nachleitstrebe (6) einen geradlinigen Verlauf aufweist.

5. Nachleitvorrichtung nach einem der vorhergehenden Ansprüche, wobei

sich der Anstellwinkel $\alpha$ von dem inneren Radius $r_i$ zu dem äu-ßeren Radius $r_a$ in Abhängigkeit des Radius r ändert, der Anstellwinkel $\alpha$ ausgehend von dem inneren Radius $r_i$ bis zu einem globalen Maximum ansteigt, der Anstellwinkel $\alpha$ ausgehend von dem globalen Maximum bis zu einem globalen Minimum abfällt.

6. Nachleitvorrichtung nach dem vorhergehenden Anspruch, wobei

der Anstellwinkel $\alpha$ ausgehend von dem inneren Radius $r_i$ bis zu dem globalen Maximum zumindest abschnittsweise linear ansteigt, das Maximum bei einem Verhältnis $r/r_a$ des Radius r zu dem äußeren Radius $r_a$ zwischen 0,65 und 0,85, insbesondere zwischen 0,71 und 0,77, liegt und der Anstellwinkel $\alpha$ ausgehend von dem globalen Maximum bis zu dem globalen Minimum fällt, wobei das globale Minimum insbesondere bei dem äußeren Radius $r_a$ liegt.

7. Nachleitvorrichtung nach einem der vorhergehenden Ansprüche, wobei der Verlauf einer Skelettlinie (6.6) des NACA-Profils aus zwei ineinander übergehenden Parabelbögen zusammengesetzt ist, so dass für den Verlauf der Skelettlinie (6.6) entlang der Profilsehne (6.5) als Funktion f gilt:

$$f(x) = 1 - \left(\frac{x_f - x}{x_f}\right)^2, x \leq x_f$$

$$f(x) = 1 - \left(\frac{x - x_f}{1 - x_f}\right)^2, x > x_f,$$

wobei x entlang der Profilsehne (6.5) der Nachleitstrebe (6) verläuft, welche die Vorderkante (6.1) und die Hinterkante (6.2) direkt und geradlinig verbindet.

8. Nachleitvorrichtung nach einem der vorhergehenden Ansprüche, wobei die Profildicke d an dem äußeren Radius $r_a$ in einem Verhältnis v von der Profildicke d an dem inneren Radius $r_i$ ist, so dass gilt $d(r_a)=d(n) \cdot v$.

9. Nachleitvorrichtung nach dem vorhergehenden Anspruch, wobei

sich die Profildicke d zwischen dem äußeren Radius $r_a$ und dem inneren Radius $r_i$ linear ändert.

10. Axialventilator (1) mit einem um eine Drehachse (7) rotierbaren Laufrad, welches ausgebildet ist, eine Strömung von einer Anströmseite des Axialventilators zu einer Abströmseite des Axialventilators zu erzeugen, wobei abströmseitig des Laufrades eine Nachleitvorrichtung gemäß einem der vorhergehenden Ansprüche angeordnet ist.

11. Axialventilator (1) nach Anspruch 10, wobei das Laufrad eine Nabe (2) und eine Vielzahl von Laufradschaufeln (3) aufweist, welche jeweils mit der Nabe (2) verbunden sind und sich von der Nabe (2) in Radialrichtung der Drehachse (7) nach radial außen erstrecken.

12. Axialventilator (1) nach Anspruch 11, wobei die Laufradschaufeln (3) jeweils eine zu der Abströmseite weisende Hinterkante (3.2) aufweisen und die Hinterkante (3.2) einen geradlinigen Verlauf hat.

13. Axialventilator (1) nach einem der vorhergehenden Ansprüche 10 bis 12,

ferner aufweisend ein durchströmbares Gehäuse und eine mittig an der Drehachse (7) in dem Gehäuse angeordnete Zentraleinheit, an welcher das Laufrad um die Drehachse (7) drehbar gelagert angeordnet ist, wobei die Nachleitstreben (6) der Nachleitvorrichtung sich von der Zentraleinheit nach radial außen zu dem Gehäuse erstrecken und mit diesen verbunden sind.

14. Axialventilator (1) nach dem vorhergehenden Anspruch, wobei in der Zentraleinheit eine Antriebseinheit angeordnet ist, durch welche die Nabe (2) des Laufrades und das Laufrad um die Drehachse (7) antreibbar sind, wobei zumindest eine der Nachleitstreben eine Aufnahme aufweist, entlang der zumindest ein elektrischer Leiter zum Anschluss an die Antriebseinheit von dem Gehäuse zu der Zentraleinheit aufnehmbar ist.

15. Axialventilator (1) nach einem der beiden vorhergehenden Ansprüche, wobei das Gehäuse des Axialventilators als ein zylindrischer Wandring (5.1) ausgebildet ist, welcher vorzugsweise Befestigungsabschnitte (5.2) zur Fixierung des Axialventilators (1) ausbildet.

16. Axialventilator (1) nach einem der vorhergehenden Ansprüche 13 bis 15, wobei

die Zentraleinheit eine Abdeckung (5.3) mit einer zu der Abströmseite weisenden Fläche aufweist, das Gehäuse des Axialventilators eine zu der Abströmseite weisende Fläche aufweist und die Hinterkanten (6.2) der Nachleitstreben (6) bündig mit den abströmseitigen Flächen der Abdeckung (5.3) der Zentraleinheit und des Gehäuses des Axialventilators abschließen.

17. Axialventilator (1) nach einem der vorhergehenden Ansprüche 12 bis 16, wobei

die Hinterkante (3.2) einer Laufradschaufel (3) in einer dritten, zu der Drehachse (7) schrägen Ebene verläuft, welche mit einer vierten, zu der Drehachse (7) orthogonalen Ebene einen Winkel $\beta$ einschließt und wobei für den Abstand $D_{ax,LN}$ der Hinterkante (3.2) der Laufradschaufel (3) zu den Vorderkanten (6.1) der Nachleitstreben (6) in Axialrichtung z $D_{ax,LN}(r) = D_{ax,min,LN} + (\tan \beta \cdot (r - r_i))$ gilt, mit $D_{ax,min,LN}$ als kleinstem axialen Abstand der Hinterkante (3.2) der Laufradschaufel (3) angrenzend an die Nabe (2) zu der Vorderkante (6.1) der Nachleitstrebe (6).

## Claims

1. A downstream guide device that is designed for arrangement in a downstream flow of an impeller of an axial fan (1), wherein

the downstream guide device has a housing and a plurality of downstream guide vanes (6), each of which is connected to the housing and each of which has a leading edge (6.1) and a trailing edge (6.2), wherein each of the downstream guide vanes (6) extends in the radial direction relative to an axis of rotation (7) of the impeller of the axial fan (1) from an inner radius $\eta$ to an outer radius $r_a$, wherein each of the downstream guide vanes (6) is embodied as a NACA airfoil in cross section, which is defined at least by the maximum airfoil camber f, position of maximum camber $x_f$, airfoil thickness d, and position of maximum thickness $x_d$ thereof, wherein each of the downstream guide vanes has an extent $L_{ax,N}$ along an axial direction z of the axial fan (1) parallel to the axis of rotation (7), wherein the orientation of each of the downstream guide vanes (6) is defined by an angle of attack $\alpha$, which is the angle between a plane orthogonal to the axis of rotation (7) and an airfoil chord (6.5) of the downstream guide vane (6), wherein the maximum airfoil camber f, the position of maximum camber $x_f$, the airfoil thickness d, the position of maximum thickness $x_d$, the angle of attack $\alpha$, and the extent $L_{ax,N}$ of each of the downstream guide vanes (6) are adapted at predetermined intervals along the radial direction from the inner radius $\eta$ to the outer radius $r_a$ to a predetermined operating point or operating range of the axial fan (1) and to the flow generated at the operating point or in the operating range of the impeller, wherein at least the maximum airfoil camber f, the position of maximum camber xr, the airfoil thickness d, the position of maximum thickness $x_d$, the angle of attack $\alpha$, or the extent $L_{ax,N}$ of a downstream guide vane (6) varies at least in some portions along its course in the radial direction, and wherein transitions between the portions of a follower vane (6) are designed to be smooth, and wherein the respective leading edge (6.1) of each of the downstream guide vanes (6) is multiply curved.

2. The downstream guide device as set forth in claim 1, wherein

the leading edge (6.1) of the downstream guide vane (6) lies entirely in a first plane, the trailing edge (6.2) of the downstream guide vane (6) lies in a second plane, and the first and second planes are parallel to one another, and wherein the extent $L_{ax,N}$ along the axial direction z of the axial fan (1), which is parallel to the axis of rotation (7), is constant over the extent of the downstream guide vane (6) in the radial direction.

3. The downstream guide device as set forth in claim 2, wherein
the first and second planes are each orthogonal to the axis of rotation (7).

4. The downstream guide device as set forth in any one of the preceding claims, wherein
the trailing edge (6.2) of the downstream guide vane (6) has a rectilinear profile.

5. The downstream guide device as set forth in any one of the preceding claims, wherein

the angle of attack $\alpha$ changes from the inner radius $\eta$ to the outer radius ra as a function of the radius r,
the angle of attack $\alpha$ increases starting from the inner radius $\eta$ to a global maximum,
the angle of attack $\alpha$ decreases starting from the global maximum to a global minimum.

6. The downstream guide device as set forth in the preceding claim, wherein

the angle of attack $\alpha$ increases linearly, at least in some portions, starting from the inner radius $\eta$ to the global maximum,
the maximum is at a ratio $r/r_a$ of the radius r to the outer radius $r_a$ of between 0.65 and 0.85, particularly between 0.71 and 0.77, and
the angle of attack $\alpha$ decreases from the global maximum to the global minimum, the global minimum being located particularly at the outer radius $r_a$.

7. The downstream guide device as set forth in any one of the preceding claims, wherein
the course of a mean camber line (6.6) of the NACA airfoil is made up of two merging parabolic arcs, so that the following applies as a function f for the course of the mean camber line (6.6) along the airfoil chord (6.5):

$$f(x) = 1 - \left(\frac{x_f - x}{x_f}\right)^2, x \le x_f$$

$$f(x) = 1 - \left(\frac{x - x_f}{1 - x_f}\right)^2, x > x_f$$

where x extends along the airfoil chord (6.5) of the downstream guide vane (6), which connects the leading edge (6.1) and the trailing edge (6.2) in a direct and rectilinear manner.

8. The downstream guide device as set forth in any one of the preceding claims, wherein
the airfoil thickness d at the outer radius $r_a$ is in a ratio v to the airfoil thickness d at the inner radius $\eta$ such that $d(r_a) = d(\eta) \cdot v$.

9. The downstream guide device as set forth in the preceding claim, wherein
the airfoil thickness d changes linearly between the outer radius $r_a$ and the inner radius $\eta$.

10. An axial fan (1) having an impeller which can be rotated about an axis of rotation (7) and which is designed to generate a flow from an inflow side of the axial fan to an outflow side of the axial fan, wherein a downstream guide device as set forth in any one of the preceding claims is arranged downstream from the impeller.

11. The axial fan (1) as set forth in claim 10, wherein the impeller has a hub (2) and a plurality of impeller blades (3), each of which is connected to the hub (2) and extends radially outward from the hub (2) in the radial direction of the axis of rotation (7),

12. The axial fan (1) as set forth in claim 11, wherein each of the impeller blades (3) has a trailing edge (3.2) pointing toward the outflow side, and the trailing edge (3.2) has a rectilinear profile.

13. The axial fan (1) as set forth in any one of preceding claims 10 to 12,

further comprising a housing through which fluid can flow and a central unit which is arranged centrally on the axis of rotation (7) in the housing and on which the impeller is arranged so as to be rotatable about the axis of rotation (7), wherein

the downstream guide vanes (6) of the downstream guide device extend radially outward from the central unit to the housing and are connected thereto.

14. The axial fan (1) as set forth in the preceding claim, wherein a drive unit is arranged in the central unit by means of which the hub (2) of the impeller and the impeller can be driven about the axis of rotation (7), wherein at least one of the downstream guide vanes has a receptacle along which at least one electrical conductor for connection to the drive unit can be accommodated from the housing to the central unit.

15. The axial fan (1) as set forth in any one of the two preceding claims, wherein the housing of the axial fan is embodied as a cylindrical wall ring (5.1) that preferably forms fastening portions (5.2) for securing the axial fan (1).

16. The axial fan (1) as set forth in any one of preceding claims 13 to 15, wherein

the central unit has a cover (5.3) with a surface facing toward the outflow side, the housing of the axial fan has a surface facing toward the outflow side, and the trailing edges (6.2) of the downstream guide vanes (6) are flush with the downstream surfaces of the cover (5.3) of the central unit and of the housing of the axial fan.

17. The axial fan (1) as set forth in any one of preceding claims 12 to 16, wherein

the trailing edge (3.2) of an impeller blade (3) extends in a third plane which is oblique to the axis of rotation (7) and forms an angle 3 with a fourth plane which is orthogonal to the axis of rotation (7), and wherein for the distance $D_{ax,LN}$ of the trailing edge (3.2) of the impeller blade (3) to the leading edges (6.1) of the downstream guide vanes (6) in the axial direction z, $D_{ax,LN}(r) = D_{axmin,LN} + (\tan \beta \cdot (r - \eta))$ applies, where $D_{axmin,LN}$ is the shortest axial distance between the trailing edge (3.2) of the impeller blade (3) adjacent to the hub (2) and the leading edge (6.1) of the downstream guide vane (6).

**Revendications**

1. Dispositif de guidage arrière, réalisé pour être disposé dans un flux côté écoulement d'une roue d'un ventilateur axial (1), dans lequel

le dispositif de guidage arrière présente un boîtier et une pluralité d'entretoises de guidage arrière (6) qui sont respectivement reliées au boîtier et qui présentent respectivement un bord d'attaque (6.1) et un bord de fuite (6.2), dans lequel chacune des entretoises de guidage arrière (6) s'étend dans la direction radiale d'un axe de rotation (7) de la roue du ventilateur axial (1) d'un rayon intérieur $r_i$ à un rayon extérieur $r_a$, dans lequel chacune des entretoises de guidage arrière (6) est réalisée en section transversale comme un profil NACA qui est déterminé au moins par sa courbure de profil maximale f, son enfoncement de courbure $x_f$, son épaisseur de profil d et son enfoncement d'épaisseur $x_d$, dans lequel chacune des entretoises de guidage arrière présente une extension $L_{ax,N}$ le long d'une direction axiale z, parallèle à l'axe de rotation (7), du ventilateur axial (1), dans lequel l'orientation de chacune des entretoises de guidage arrière (6) est déterminée respectivement par un angle d'incidence $\alpha$ qui est l'angle entre un plan orthogonal à l'axe de rotation (7) et une corde de profil (6.5) de l'entretoise de guidage arrière (6), dans lequel la courbure de profil maximale f, l'enfoncement de courbure $x_f$, l'épaisseur de profil d, l'enfoncement d'épaisseur $x_d$, l'angle d'incidence $\alpha$ et l'extension $L_{ax,N}$ de chacune des entretoises de guidage arrière (6) sont adaptés à intervalles prédéterminés le long de la direction radiale du rayon intérieur $r_i$ au rayon extérieur $r_a$ à un point de fonctionnement ou à une plage de fonctionnement prédéterminé(e) du ventilateur axial (1), et au flux produit par la roue au point de fonctionnement ou dans la plage de fonctionnement, dans lequel au moins la courbure de profil maximale f, l'enfoncement de courbure $x_f$, l'épaisseur de profil d, l'enfoncement d'épaisseur $x_d$, l'angle d'incidence $\alpha$, ou l'extension $L_{ax,N}$ d'une entretoise de guidage arrière (6) varie au moins par endroits le long de son tracé dans la direction radiale, et dans lequel

les passages entre les sections d'une entretoise de guidage arrière (6) sont réalisés en continu, dans lequel

le bord d'attaque respectif (6.1) de chacune des entretoises de guidage arrière (6) est courbé plusieurs fois.

2. Dispositif de guidage arrière selon la revendication 1, dans lequel

le bord d'attaque (6.1) de l'entretoise de guidage arrière (6) se trouve entièrement dans un premier plan, le bord de fuite (6.2) de l'entretoise de guidage arrière (6) se trouve dans un deuxième plan, et le premier et le deuxième plan sont parallèles l'un à l'autre, et dans lequel l'extension $L_{ax,N}$ le long de la direction axiale z, parallèle à l'axe de rotation (7), du ventilateur axial (1) est constante dans la direction radiale sur l'extension de l'entretoise de guidage arrière (6).

3. Dispositif de guidage arrière selon la revendication 2, dans lequel le premier et le deuxième plan sont respectivement orthogonaux à l'axe de rotation (7).

4. Dispositif de guidage arrière selon l'une quelconque des revendications précédentes, dans lequel le bord de fuite (6.2) de l'entretoise de guidage arrière (6) présente un tracé rectiligne.

5. Dispositif de guidage arrière selon l'une quelconque des revendications précédentes, dans lequel

l'angle d'incidence $\alpha$ varie du rayon intérieur $r_i$ au rayon extérieur $r_a$ en fonction du rayon r, l'angle d'incidence $\alpha$ augmente en partant du rayon intérieur $\eta$ jusqu'à un maximum global, l'angle d'incidence $\alpha$ diminue en partant du maximum global jusqu'à un minimum global.

6. Dispositif de guidage arrière selon la revendication précédente, dans lequel

l'angle d'incidence $\alpha$ augmente de manière linéaire au moins par endroits en partant du rayon intérieur $r_i$ jusqu'à un maximum global, pour un rapport $r/r_a$ entre le rayon r et le rayon extérieur $r_a$, le maximum est compris entre 0,65 et 0,85, en particulier entre 0,71 et 0,77, et l'angle d'incidence $\alpha$ diminue en partant du maximum global jusqu'à un minimum global, le minimum global étant en particulier situé au rayon extérieur $r_a$.

7. Dispositif de guidage arrière selon l'une quelconque des revendications précédentes, dans lequel le tracé de la ligne moyenne (6.6) du profil NACA est composé de deux arcs de parabole qui se confondent de sorte que pour le tracé de la ligne moyenne (6.6) le long de la corde de profil (6.5), soit :

$$f(x) = 1 - \left(\frac{x_f - x}{x_f}\right)^2, x \leq x_f$$

$$f(x) = 1 - \left(\frac{x - x_f}{1 - x_f}\right)^2, x > x_f$$

comme la fonction f,
dans lequel x passe le long de la corde de profil (6.5) de l'entretoise de guidage arrière (6) qui relie le bord d'attaque (6.1) au bord de fuite (6.2) directement et de manière rectiligne.

8. Dispositif de guidage arrière selon l'une quelconque des revendications précédentes, dans lequel l'épaisseur de profil d se trouve au rayon extérieur $r_a$ dans un rapport v de l'épaisseur de profil d au rayon intérieur $r_i$ tel que soit $d(r_a) = d(n) \cdot v$.

9. Dispositif de guidage arrière selon la revendication précédente, dans lequel l'épaisseur de profil d varie de manière linéaire entre le rayon extérieur $r_a$ et le rayon intérieur n.

10. Ventilateur axial (1), comprenant une roue pouvant tourner autour d'un axe de rotation (7) et qui est réalisée pour produire un flux d'un côté admission du ventilateur axial à un côté écoulement du ventilateur axial, dans lequel un dispositif de guidage arrière selon l'une quelconque des revendications précédentes est disposé côté écoulement,

11. Ventilateur axial (1) selon la revendication 10, dans lequel

la roue présente un moyeu (2) et une pluralité d'aubes de roue (3) qui sont reliées respectivement au moyeu (2) et s'étendent du moyeu (2) radialement vers l'extérieur dans la direction radiale de l'axe de rotation (7).

12. Ventilateur axial (1) selon la revendication 11, dans lequel les aubes de roue (3) présentent respectivement un bord de fuite (3.2) tourné vers le côté écoulement, et le bord de fuite (3.2) présente un tracé rectiligne.

**13.** Ventilateur axial (1) selon l'une quelconque des revendications précédentes 10 à 12,

présentant en outre un boîtier pouvant être traversé et une unité centrale disposée au centre sur l'axe de rotation (7) dans le boîtier et sur laquelle la roue est disposée en étant montée en rotation autour de l'axe de rotation (7), dans lequel

les entretoises de guidage arrière (6) du dispositif de guidage arrière s'étendent de l'unité centrale radialement vers l'extérieur jusqu'au boîtier et sont reliées à ceux-ci.

**14.** Ventilateur axial (1) selon la revendication précédente, dans lequel

dans l'unité centrale est disposée une unité d'entraînement qui permet d'entraîner le moyeu (2) de la roue et la roue autour de l'axe de rotation (7), dans lequel au moins l'une des entretoises de guidage arrière présente un logement le long duquel au moins un conducteur électrique peut être reçu pour le raccordement à l'unité d'entraînement du boîtier à l'unité centrale.

**15.** Ventilateur axial (1) selon l'une des deux revendications précédentes, dans lequel

le boîtier du ventilateur axial est réalisé sous la forme d'un anneau de paroi cylindrique (5.1) qui réalise de préférence des sections de fixation (5.2) pour la fixation du ventilateur axial (1).

**16.** Ventilateur axial (1) selon l'une quelconque des revendications précédentes 13 à 15, dans lequel

l'unité centrale présente un recouvrement (5.3) pourvu d'une surface tournée vers le côté écoulement,

le boîtier du ventilateur axial présente une surface tournée vers le côté écoulement, et

les bords de fuite (6.2) des entretoises de guidage arrière (6) terminent en affleurement avec les surfaces côté écoulement du recouvrement (5.3) de l'unité centrale et du boîtier du ventilateur axial.

**17.** Ventilateur axial (1) selon l'une quelconque des revendications précédentes 12 à 16, dans lequel

le bord de fuite (3.2) d'une pale de roue (3) s'étend dans un troisième plan incliné par rapport à l'axe de rotation (7) et qui forme avec un quatrième plan orthogonal à l'axe de rotation (7) un angle $\beta$, et dans lequel pour la distance $D_{ax,LN}$ du bord de fuite (3.2) de la pale de roue (3) aux bords d'attaque (6.1) des entretoises de guidage arrière (6) dans la direction axiale z, soit $D_{ax,LN}(r) = D_{ax,min,LN} + (\tan \beta \cdot (r-n))$, où $D_{ax,min,LN}$ est la plus petite distance axiale du bord de fuite (3.2) de la pale de roue (3) de manière adjacente au moyeu (2) jusqu'au bord d'attaque (6.1) de l'entretoise de guidage arrière (6).

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008193287 A1
- US 2006093476 A1